# EUROPÄISCHE PATENTANMELDUNG

(11) **EP 1 378 312 A2**
(43) Veröffentlichungstag der Anmeldung: **07.01.2004**
(21) Anmeldenummer: 03014922.3
(22) Anmeldetag: 01.07.2003
(51) Int. Cl.: B23K 9/20, B23K 11/00, B23K 35/02, F16B 37/06

(54) **Verfahren und Vorrichtung zum Lichtbogenschweissen von Elementen auf beschichtete Bauteile und Element geeignet für das Lichtbogenschweissverfahren**

(30) Priorität: 04.07.2002 DE 10230846
(71) Anmelder: Newfrey LLC, Newark, Delaware 19711 (US)
(72) Erfinder: Schmitt, Klaus, Gisbert, Dr., 35390 Giessen (DE); Schneider, Joachim, 35630 Ehringshausen (DE)
(74) Vertreter: Haar, Lucas H., Dipl.-Ing.

(57) **Zusammenfassung**

Es werden eine Vorrichtung und ein Verfahren zum Lichtbogenschweißen von Elementen (16), insbesondere Metallbolzen, auf beschichtete Bauteile (18), insbesondere Metallbleche, angegeben, bei dem ein Element (16) in einem ersten Schritt relativ zum Bauteil (18) bewegt wird, um die Beschichtung des Bauteils (18) zur Herstellung eines elektrischen Kontakts zwischen Bauteil und Element zumindest teilweise aufzubrechen, wobei das Bauteil (18) und das Element (16) in einem nachfolgenden Schritt miteinander verschweißt werden. Das Element wird zumindest um seine Längsachse (24) oszillierend bewegt, um die Beschichtung des Bauteils (18) zumindest teilweise aufzubrechen.

## Beschreibung

Die Erfindung betrifft ein Verfahren zum Lichtbogenschweißen von Elementen, insbesondere Metallbolzen, auf beschichtete Bauteile, insbesondere Metallbleche, bei dem ein Element in einem ersten Schritt relativ zum Bauteil bewegt wird, um die Beschichtung des Bauteils zur Herstellung eines elektrischen Kontakts zwischen Bauteil und Element zumindest teilweise aufzubrechen, wobei das Bauteil und das Element in einem nachfolgenden Schritt miteinander verschweißt werden.

Die Erfindung betrifft ferner eine Vorrichtung zum Lichtbogenschweißen von Elementen, insbesondere Metallbolzen, auf Bauteile, insbesondere Metallbleche, mit einem Schweißkopf, in dem ein Halter zur Aufnahme eines zu verschweißenden Elementes vorgesehen ist, mit einer Leistungsversorgungseinrichtung zur Zuführung elektrischer Energie und mit Mitteln zur Bewegung des Halters relativ zum Bauteil.

Die Erfindung betrifft schließlich ein Element, das besonders zur Verwendung mit einem derartigen Verfahren geeignet ist.

Aus der US-A-3 340 379 sind ein Verfahren und eine Vorrichtung zum Lichtbogenschweißen von Elementen auf Metallbleche bekannt geworden, die mit einer Beschichtung, z.B. mit einer Lackierung, versehen sind. Hierzu weisen die Elemente an der dem Bauteil zugewandten Fläche spitze Vorsprünge auf, mit der die Beschichtung durchdrungen wird, um einen metallischen Kontakt zwischen Element und Bauteil herzustellen. Anschließend werden Element und Bauteil durch Lichtbogenschweißen miteinander verbunden.

Bei dem sog. Kurzzeit-Lichtbogenschweißen, das auch unter dem Begriff "Bolzenschweißen" allgemein bekannt ist, wird ein in einem Halter aufgenommenes Element im Rahmen eines Schweißvorgangs zunächst gegenüber dem Bauteil angehoben, ein Schweißlichtbogen zwischen Element und Bauteil gebildet und das Element anschließend wieder abgesenkt.

Die Technologie des Bolzenschweißens wird insbesondere, jedoch nicht ausschließlich, in der Fahrzeugtechnik eingesetzt. Mit dieser Technologie können Bolzen mit oder ohne Gewinde, Muttern, Ösen und andere Elemente auf Karosseriebleche aufgeschweißt werden. Die Elemente dienen dann in der Regel als Halteanker zum Befestigen von beispielsweise Innenraumausstattungen an der Fahrzeugkarosserie.

Mit dem eingangs genannten Verfahren kann ein solches Bolzenschweißen grundsätzlich auch an beschichteten, z.B. lackierten Karosserieblechen ausgeführt werden. Problematisch ist die Anwendung des bekannten Verfahrens jedoch dann, wenn die Bauteile, z.B. die Karosseriebleche, sehr dünn sind und somit beim Aufbrechen der Beschichtung durch Anpressen mit den Vorsprüngen des Elementes mit bleibenden Verformungen zu rechnen ist.

Aus der DE-A-199 25 628 ist ferner ein Verfahren und eine Vorrichtung zum Bolzenschweißen bekannt geworden, bei dem das Bauteil vor dem eigentlichen Schweißprozeß durch Kurzzeit-Lichtbogenschweißen zunächst durch einen Lichtbogen gereinigt wird. Dies ist insbesondere zur Anwendung bei Stahlblechen und Aluminiumblechen geeignet, die eine organische Beschichtung aufweisen oder aber verzinkt sind. Bei der Beschichtung kann es sich beispielsweise um eine Wachsschicht handeln.

Das bekannte Verfahren und die bekannte Vorrichtung sind zwar zur Anwendung bei Bauteilen geeignet, die mit einer dünnen Beschichtung oder Verzinkung versehen sind, sind jedoch nicht geeignet, um bei einer gut haftenden isolierenden Beschichtung, wie z.B. einer Lackierung, verwendet zu werden.

Der Erfindung liegt somit die Aufgabe zugrunde, ein Verfahren und eine Vorrichtung zum Lichtbogenschweißen von Elementen auf beschichtete Bauteile zu schaffen, womit die vorstehend genannten Nachteile vermieden werden. Insbesondere soll die Herstellung von dauerhaften und qualitativ hochwertigen Verschweißungen von Elementen mit metallischen Bauteilen auch dann ermöglicht werden, wenn diese eine nur geringe Stärke aufweisen und mit einer dichten, isolierenden Beschichtung, wie z.B. einer Lackschicht, versehen sind. Ferner sollen besonders geeignete Elemente zur Anwendung bei einem derartigen Verfahren angegeben werden.

Diese Aufgabe wird bei einem Verfahren gemäß der eingangs genannten Art dadurch gelöst, daß das Element um seine Längsachse oszillierend bewegt wird, um die Beschichtung des Bauteils zumindest teilweise aufzubrechen.

Diese Aufgabe wird ferner bei einer Vorrichtung gemäß der eingangs genannten Art dadurch gelöst, daß der Halter um seine Längsachse oszillierend antreibbar ist.

Erfindungsgemäß wird nämlich durch die oszillierende Bewegung des Elementes um seine Längsachse ein schonendes Aufbrechen oder Ankratzen der Beschichtung des Bauteils an seiner Oberfläche ermöglicht, selbst dann, wenn es sich um ein Bauteil nur sehr geringer Stärke, z.B. mit einer Blechstärke von 1 mm oder weniger, handelt.

In bevorzugter Weiterbildung der Erfindung wird das Element während des ersten Schrittes in Axialrichtung zusätzlich oszillierend in Bezug auf das Bauteil vor und zurück bewegt. Hierdurch kann das Aufbrechen der Beschichtung unterstützt werden, um einen ersten elektrischen Kontakt zwischen dem Bauteil und dem Element herzustellen.

Gemäß einer weiteren Ausgestaltung der Erfindung wird das Bauteil mittels eines Überdrucks oder eines Unterdrucks von Resten der Beschichtung befreit. Auf diese Weise können Teile der Beschichtung, die durch die oszillierende Bewegung des Elementes relativ zum Bauteil aufgebrochen sind oder abgeplatzt sind, entweder weggeblasen oder abgesaugt werden, um das Bauteil in dem Bereich, in dem die spätere Verschweißung zwischen Bauteil und Element hergestellt werden soll, möglichst weitgehend zu reinigen.

Ein Element, das besonders zur Durchführung des erfindungsgemäßen Schweißverfahrens geeignet ist, weist einen Flanschbereich zur Verschweißung mit dem Bauteil auf, an dem Erhebungen zum Ankratzen der Beschichtung des Bauteils vorgesehen sind. Hierbei weist der Flanschbereich einen ringförmig ausgebildeten Vorsprung auf, an dessen Stirnfläche die Erhebungen ausgebildet sind.

Mit derartigen Elementen können hochwertige Verschweißungen auch an Bauteilen besonders geringer Stärke hergestellt werden. Insbesondere wird damit auch das Aufschweißen eines Elementes auf ein Bauteil im Bereich einer Öffnung ermöglicht, so daß insbesondere auch ein Element mit einem Innengewinde auf ein Bauteil aufgeschweißt werden kann, das durch die Öffnung hindurch nachfolgend zugänglich ist.

Bei dem erfindungsgemäßen Schweißverfahren schließt sich vorzugsweise an den ersten Schritt, in dem die Beschichtung des Bauteils zunächst zumindest teilweise aufgebrochen bzw. aufgekratzt wird, ein zweiter Schritt an, bei dem das Bauteil mittels eines Lichtbogens gereinigt wird. Auf diese Weise wird eine besonders schonende Behandlung des Bauteils ermöglicht.

In weiter bevorzugter Ausgestaltung der Erfindung wird der Lichtbogen während des Reinigungsschrittes durch ein Magnetfeld abgelenkt. Hierbei ist das Magnetfeld vorzugsweise so ausgerichtet, daß der Lichtbogen während des Reinigungsschrittes auf einer geschlossenen Bahn um die Längsachse des Elementes umläuft. Auf diese Weise kann eine Reinigung der Bauteiloberfläche insbesondere in dem Bereich, in dem die spätere Verschweißung vorzugsweise mit einem Element, das einen ringförmigen Vorsprung aufweist, auf besonders schonende Weise durchgeführt werden.

In zusätzlicher Weiterbildung der Erfindung schließt sich an den zweiten Schritt ein dritter Schritt an, in dem die Spannung zwischen Bauteil und Element umgepolt wird und das Element mit dem Bauteil verschweißt wird. Dadurch kann die Reinigung der Bauteiloberfläche durch Änderung des Lichtbogens beeinflußt werden. Da sich die Verschweißung hierbei unmittelbar an den Reinigungsschritt mittels des Lichtbogens anschließt, ergibt sich eine besonders kurze Taktzeit. Durch eine Umkehrung der Polarität der Spannung zwischen Bauteil und Element kann während des vorgeschalteten Reinigungsschrittes bei positiver Polarität des Elementes eine größere Aufweitung des Lichtbogens erzielt werden. Dagegen wird der Lichtbogen bei der anschließenden Umpolung bei negativer Polarität des Elementes stärker konzentriert, was zur Herstellung einer Schweißverbindung in dem nachfolgenden Schritt besonders geeignet ist.

Bei der erfindungsgemäßen Vorrichtung kann der Antrieb des Halters zur Erzeugung der Oszillationsbewegung um seine Längsachse magnetisch erfolgen. Hierzu kann der Halter mit einem Antriebshebel mit einem radialen Abschnitt gekoppelt sein, der zwischen zwei einander gegenüberliegenden Spulen hin und her beweglich ist. Dies ist eine besonders einfache Möglichkeit zur Erzeugung der oszillierenden Bewegung um die Längsachse des Halters.

Bei einer alternativen Ausführung ist der Halter mit einem Exzenterantrieb zur Erzeugung der Oszillationsbewegung um die Längsachse gekoppelt. Auch auf diese Weise läßt sich mit relativ einfachen Mitteln die Oszillationsbewegung um die Längsachse erzeugen.

Zum Antrieb in Axialrichtung ist vorzugsweise ein Linearmotor vorgesehen. Auf diese Weise kann der meist ohnehin verwendete Linearmotor zur Bewegung des Elementes relativ zum Bauteil gleichfalls für die Erzeugung einer Oszillationsbewegung zur Unterstützung der Reinigung des Bauteils von dessen Beschichtung verwendet werden.

Es versteht sich, daß die vorstehend genannten und die nach-stehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erfindungsgemäße Vorrichtung in stark vereinfachter, schematischer Darstellung;
- Fig. 2: eine Seitenansicht des Schweißkopfes gemäß Fig. 1 in vergrößerter, jedoch gleichfalls vereinfachter Darstellung;
- Fig. 3: einen Schnitt durch den Halter gemäß Fig. 2 gemäß der Linie III-III;
- Fig. 4: eine Darstellung gemäß Fig. 3 mit einer alternativen Ausführung des Antriebs zur Erzeugung des Oszillationsbewegung des Halters um seine Längsachse;
- Fig. 5: einen Längsschnitt durch ein zu verschweißendes Element in einer ersten Ausführung;
- Fig. 6: eine Vorderansicht des Elementes gemäß Fig. 5;
- Fig. 7: eine schematische Darstellung, die das Umlaufen des Lichtflecks unter dem Einfluß eines Magnetfeldes verdeutlicht;
- Fig. 8: den Verlauf des Lichtbogenstromes I und der Entfernung s des Elementes vom Bauteil über der Zeit t während des Reinigungsschrittes und des nachfolgenden Schweißschrittes;
- Fig. 9: einen Längsschnitt durch den Schweißkopf mit einem zugeordneten Bauteil im vorderen Bereich des Halters und
- Fig. 10-14: verschiedene Ausführungen von zu verschweißenden Elementen in der Seitenansicht und in der Stirnansicht vom Bauteil aus gesehen.

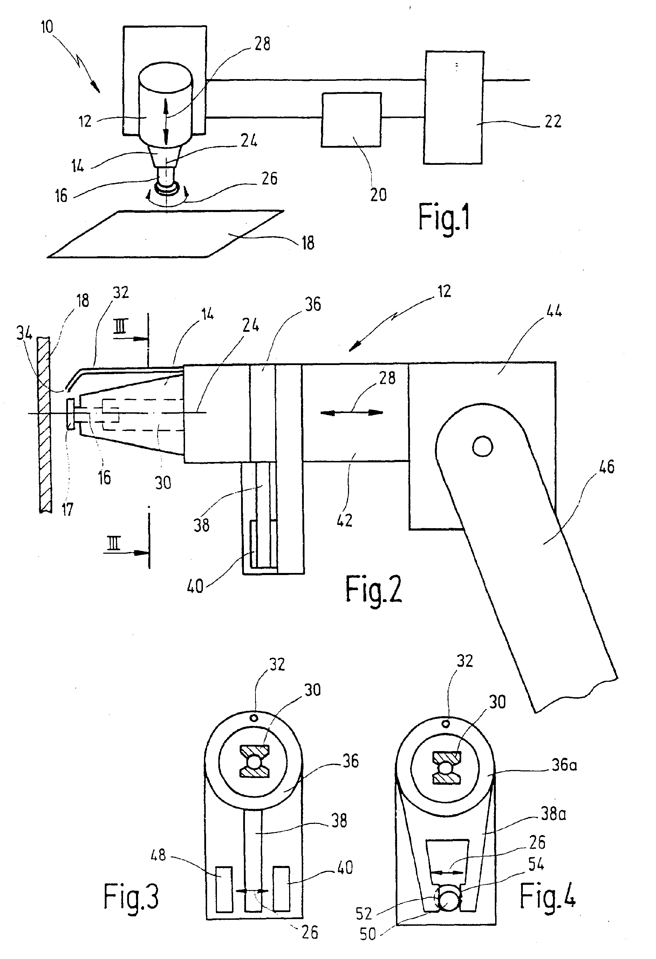

In Fig. 1 ist eine Vorrichtung zum Schweißen von Metallelementen 16 auf Bauteile 18 äußerst schematisch dargestellt und insgesamt mit der Ziffer 10 bezeichnet.

Bei den Metallelementen 16 könnte es sich im dargestellten Fall beispielsweise um Bolzen handeln, die auf ein lakkiertes Karosserieblech aufgeschweißt werden sollen. Als Schweißverfahren wird hierzu das sog. Kurzzeit-Lichtbogenschweißen verwendet, das grundsätzlich bekannt ist.

Die Vorrichtung 10 weist einen Schweißkopf 12 auf, der bei einem Einsatz in der Fahrzeugindustrie in der Regel an einem Roboterarm 46 aufgenommen ist (vgl. Fig. 2) . Im Schweißkopf 12 ist ein Halter 14 zur Aufnahme eines zu verschweißenden Elementes 16 vorgesehen. Zum Halter 14 werden zu verschweißende Elemente aus einer Elementenzuführeinrichtung 20 beispielsweise mittels Druckluft zugeführt. Die zum Kurzzeit-Lichtbogenschweißen notwendige Leistung wird von einer Leistungsversorgungseinrichtung 22 bereitgestellt, die mit einer Steuereinrichtung gekoppelt ist.

Der Halter 14 und damit ein darin aufgenommenes zu verschweißendes Element 16 ist um die Längsachse 24 des Halters oszillierend hin und her bewegbar, wie durch den Doppelpfeil 26 angedeutet ist. Ferner ist der Halter 14 durch eine geeignete Antriebsvorrichtung in Bezug auf das Bauteil 18 nicht nur für den Schweißprozeß selbst vor und zurück bewegbar, sondern auch vor Beginn des Schweißprozesses oszillierend hin und her bewegbar, wie durch den Doppelpfeil 28 angedeutet ist.

Gemäß Fig. 2 ist am Schweißkopf 12 der Halter 14 aufgenommen, in dem eine Spannzange 30 zum Halten von zu verschweißenden Elementen 16 vorgesehen ist. Die Spannzange 30 ist mittels eines Antriebshebels 36 oszillierend um die Längsachse 24 des Halters 14 bewegbar. Hierzu weist der Antriebshebel 36 einen radialen Abschnitt 38 auf (vgl. Fig. 3), der zwischen zwei gegenüberliegenden Spulen 40, 48 hin und her bewegbar ist, wie durch den Pfeil 26 angedeutet ist. Zumindest der radiale Abschnitt 38 des Antriebshebels 36 ist hierzu aus einem ferromagnetischen Material ausgebildet. Die Polarität der Spule 40, 48 wird periodisch umgeschaltet, wozu die Richtung eines geeigneten, die Spulen durchfließenden Gleichstromes jeweils umgekehrt wird. Der radiale Abschnitt 38 wird somit abwechselnd zur einen Spule 40 und zur anderen Spule 48 hin angezogen, wodurch der Antriebshebel 36 oszillierende Bewegungen ausführt.

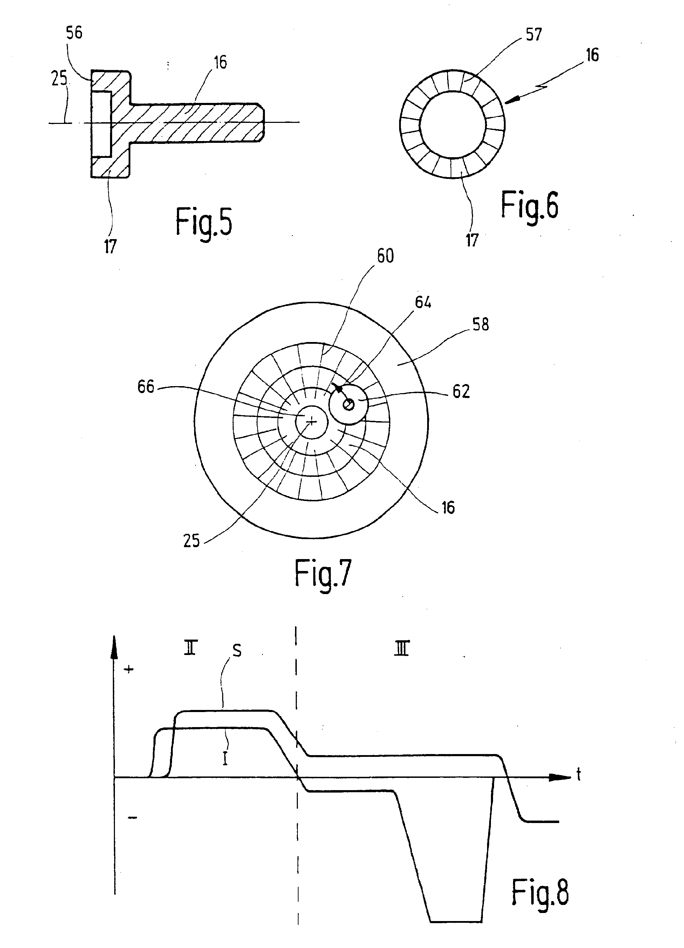

Es versteht sich, daß eine derartige Oszillationsbewegung auch durch einen Exzenterantrieb erreicht werden kann, wie dies beispielhaft anhand von Fig. 4 dargestellt ist. Der Antriebshebel 36a ist hierbei als Schwinghebel 38a ausgebildet, der zwei einander gegenüberliegende ebene Führungsflächen 52, 54 aufweist, die an einem Exzenter 50 anliegen, so daß eine Exzenterbewegung in eine Oszillationsbewegung des Antriebshebels 36a umgesetzt wird.

Gemäß Fig. 2 ist im Bereich des Halters 14 ferner noch eine Gasleitung 32 vorgesehen, die neben einem zu verschweißenden Element 16 im Bereich dessen Kopfes oder Flanschbereiches 17 mit einer Öffnung 34 ausmündet.

Der Antriebsmechanismus für den oszillierenden Antrieb 38, 40 bzw. 38a, 50, 52, 54 ist in nicht näher dargestellter Weise mittels eines Linearmotors 42 in Bezug auf das Bauteil vor und zurück bewegbar. Der Linearmotor 42 ist über eine Aufnahme 44 mit dem Roboterarm 46 verbunden, durch den der Schweißkopf 12 in geeigneter Weise vorzugsweise numerisch gesteuert in Bezug auf das Bauteil 18 positioniert werden kann.

Vor dem eigentlichen Verschweißen des Elementes 16 mit dem Bauteil 18 erfolgt ein mechanisches Aufbrechen der Beschichtung des Bauteils und eine nachfolgende Reinigung der Bauteiloberfläche im Bereich der späteren Schweißstelle mit Hilfe eines Lichtbogens. Diese Verfahrensschritte werden im folgenden kurz erläutert:

Zunächst wird aus der Elementenzuführeinrichtung 20 ein Element 16 in die Spannzange 30 des Halters 14 beispielsweise mittels Druckluft zugeführt. Das Element 16 kann beispielsweise die Form gemäß der Fig. 5 und 6 aufweisen. Hiernach weist das Element 16 an seiner dem Bauteil 18 zugewandten Seite einen Flanschbereich 17 auf, an dem bauteilseitig ein ringförmiger Vorsprung 56 vorgesehen ist, so daß sich insgesamt eine topfförmige Gestalt des Flanschbereiches 17 ergibt. Das betreffende Element 16 ist rotationssymmetrisch ausgebildet, wie durch die Symmetrieachse oder Längsachse 25 angedeutet ist. Bei der späteren Aufnahme des Elementes 16 in der Spannzange 30 fällt die Längsachse 25 des Elementes 16 mit der Längsachse 24 des Halters 14 bzw. der Spannzange 30 zusammen.

Wie aus der Ansicht der Stirnfläche des Elementes 16 gemäß Fig. 6 zu ersehen ist, sind an der dem Bauteil zugewandten Oberfläche des ringförmigen Vorsprungs 56 Erhebungen 57 ausgebildet, bei denen es sich im dargestellten Fall um radial verlaufende Vorsprünge oder Kanten handelt.

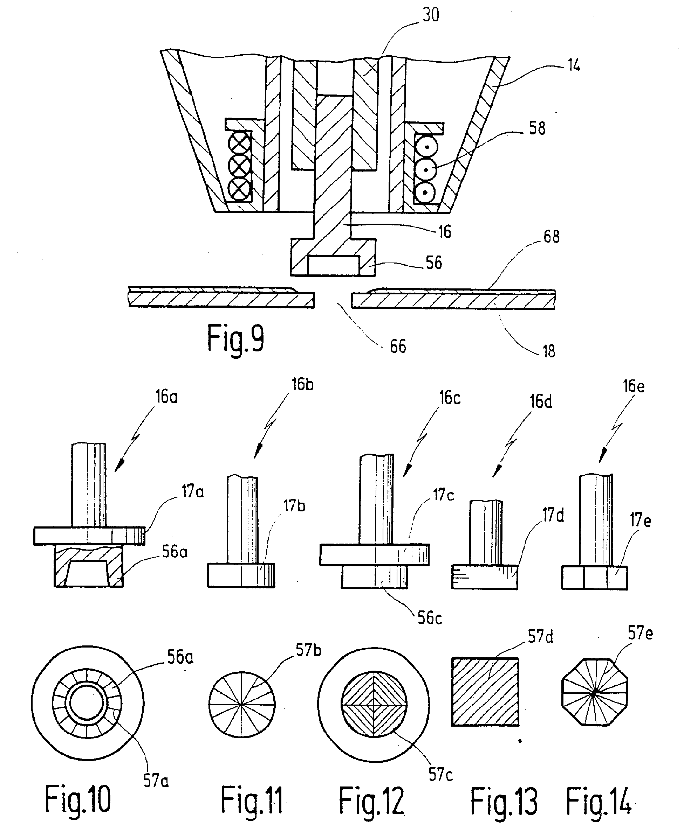

Ist nun ein zu verschweißendes Element 16 in der Spannzange 30 aufgenommen, so wird dieses mittels des Linearmotors 28 zunächst bis an die Oberfläche des Bauteils gemäß Fig. 9 herangefahren, während die Spannzange 30 um ihre Längsachse oszillierend angetrieben wird. Zusätzlich kann noch eine oszillierende Bewegung der Spannzange 30 in Axialrichtung überlagert sein. Durch diese Relativbewegung zwischen Bauteil 18 und Element 16 wird die auf der Bauteiloberfläche haftende Beschichtung 68 (z.B. Lackschicht) im Bereich des ringförmigen Vorsprungs 56 angekratzt, so daß zumindest teilweise ein elektrischer Kontakt zwischen dem Element 16 und dem Bauteil 18 hergestellt wird. Dies ist die erste Stufe des insgesamt dreistufigen Prozesses zur Herstellung einer Verschweißung. Zusätzlich wird hierbei die Gasleitung 32 mit Druckluft beaufschlagt, um das Bauteil 18 im Bereich der späteren Schweißstelle von Resten der Beschichtung 68 zu reinigen.

Anschließend erfolgt im zweiten Schritt des Prozesses nunmehr eine Reinigung der Oberfläche des Bauteils 18 mit Hilfe eines Lichtbogens. Hierzu wird das Element 16 zunächst ausgehend von einem elektrischen Kontakt gemäß Fig. 8, indem mit positiver Polarität des Elementes 16 und negativer Polarität des Bauteils ein Lichtbogen gezündet wird, zunächst das Element 16 angehoben, wie durch den Weg s angedeutet ist. Hierbei entsteht ein Lichtbogen, durch den eine auf der Oberfläche des Bauteils 18 noch haftende Beschichtung 68 verdampft wird, so daß die Bauteiloberfläche gereinigt wird. Dies wird auch als sog. "clean-flash-Prozeß" bezeichnet. In Fig. 8 ist dieser Reinigungsschritt, bei dem sich der Lichtbogen infolge der positiven Polarität zum Bauteil hin aufweitet, durch die Phase II gekennzeichnet.

Während der Reinigungsphase II wird der einsetzende Reinigungsstrom vorzugsweise auf eine Größe zwischen etwa 20 und 500 Ampere geregelt. Diese Reinigungsstärke wird vorzugsweise auch für einen gewissen Zeitraum in etwa konstant gehalten, wie durch den zeitlichen Verlauf während der Phase II in Fig. 8 angedeutet ist. Nach einer kurzen zeitlichen.Verzögerung nach Einschalten des Stromes I wird das Element von der Oberfläche des Bauteils 18 abgehoben und vorzugsweise auf einen etwa konstanten Abstand s gebracht. Die Reinigungsstromstärke wird konstant gehalten, die Lichtbogenspannung stellt sich entsprechend des Abstandes s und dem Grad der Reinigung ein. Der Abstand s liegt in der Größenordnung von etwa 3 mm. Nach einer Zeitdauer Δt, die mit dem Abheben des Elementes von der Oberfläche des Bauteils 18 beginnt und mit dem Abfallen der Reinigungsstromstärke auf 0 Ampere aufhört, ist die Oberfläche des Bauteils gereinigt. Die Zeitdauer Δt wird vorzugsweise zwischen etwa 15 Millisekunden und 120 Millisekunden eingestellt.

In einer unmittelbar sich daran anschließenden Phase III wird die Polarität der Spannung zwischen Bauteil und Element umgepolt, so daß das Element negativ gepolt ist, während das Bauteil positiv gepolt ist. Nach einem kurzen Pilotstrom, der für eine Stabilisierung des Schweißstromes sorgt, wird der Schweißstrom zur Herstellung einer dauerhaften Verschweißung zwischen Bauteil und Element etwa auf einen Bereich zwischen 500 und 1500 Ampere eingestellt. Das anzuschweißende Element, das wieder in Kontakt mit der Oberfläche des Bauteils gewesen ist, wird dazu von der Oberfläche wieder entfernt (vgl. Fig. 8). Während der sich an die Pilotstromphase anschließenden Schweißphase wird die Bauteiloberfläche so weit aufgeschmolzen, daß eine genügende Bandtiefe zur Verfügung gestellt wird. Nach Abfall des Schweißstromes auf 0 Ampere wird noch eine gewisse Zeitdauer abgewartet, so daß das Schweißbad teigig wird. Erst dann wird das zu verschweißende Element in die Oberfläche abgetaucht und die Schweißverbindung hergestellt.

Der Lichtbogen wird während der Reinigungsphase mittels eines Magnetfeldes gesteuert bzw. abgelenkt, wie schematisch durch Fig. 7 angedeutet ist.

Das Magnetfeld kann beispielsweise durch eine Spule 58 gemäß Fig. 9 erzeugt werden. Befindet sich der Lichtbogen 62 im Bereich des Streufeldes der Spule 58, d.h. im Bereich des axialen Endes der Spule, so verlaufen die Feldlinien, die in Fig. 7 durch die Ziffer 60 angedeutet sind, in diesem Bereich etwa in Radialrichtung. Auf diese Weise ergibt sich ein rotierender Lichtbogen 62 mit einem Durchmesser von ca. 3 bis 4 mm, der auf einer kreisförmigen Bahn um die Längsachse 25 des Elementes umläuft. Die-Richtung der auf den Lichtbogen 62 infolge der Lenzschen Regel ausgeübten Kraft ist in Fig. 7 beispielhaft durch den Pfeil 64 angedeutet.

Durch den umlaufenden Lichtbogen wird eine übermäßige lokale Erwärmung vermieden, was insbesondere bei dünnen Bauteilen von Vorteil ist und insbesondere bei Verwendung von Elementen mit ringförmigen Vorsprüngen 56 gemäß Fig. 5 und 6 von Vorteil ist.

Die Spule 58 wird vorzugsweise mit einem Wechselstrom betrieben, der zwischen etwa 8 und 30 Volt beträgt. Eingesetzt wird vorzugsweise eine Stromstärke zwischen etwa 0,1 und 2 Ampere.

Da auch während des eigentlichen Schweißvorgangs in Phase III eine Steuerung des Lichtbogens erwünscht ist, hierbei jedoch in der Regel kein auf einer kreisförmigen Bahn rotierender Lichtbogen, sondern ein auf die Schweißstelle fokussierter Lichtbogen erwünscht ist, kann ggf. eine Verfahrbarkeit der Spule 58 relativ zur Spannzange 30 vorgesehen sein, um den Lichtbogen für den Schweißvorgang in das axiale Magnetfeld der Spule 58 zu bringen, wodurch sich eine Ausrichtung des Lichtbogens auf die Längsachse 25 des Elementes ergibt.

Wie aus den Fig. 7 und 9 ersichtlich ist, kann das Bauteil 18 im Bereich der herzustellenden Verschweißung eine Öffnung oder ein Loch 66 aufweisen, um das herum der Vorsprung 56 des Elementes 16 aufgeschweißt werden soll. Ein Element 16 mit einem ringförmig vorstehenden Vorsprung 56 kann vorteilhaft besonders in solchen Fällen verwendet werden.

Bei entsprechender Dimensionierung des Loches 66 und des ringförmigen Vorsprungs 56 kann auf diese Weise auch ein Element 16 mit einem Innengewinde auf das Bauteil 18 aufgeschweißt werden, das anschließend durch die Öffnung 66 hindurch zur Verschraubung durch das Loch 66 hindurch genutzt werden kann.

Es versteht sich, daß das Element 16 die verschiedenartigsten Formen aufweisen kann, wie beispielhaft anhand der Elemente 16a, 16b, 16c, 16d, 16e gemäß der Fig. 10, 11, 12, 13 und 14 erläutert ist.

Gemäß Fig. 10 umfaßt der Flanschbereich 17a einen ringförmigen Vorsprung 56a, der unter Bildung einer Schulter an der Außenseite des Flanschbereiches 17a von diesem aus bauteilseitig hin vorsteht. Wiederum sind an der Stirnfläche des ringförmigen Vorsprungs 56a Erhebungen 57a in Form von radial verlaufenden Kanten vorgesehen.

Gemäß Fig. 11 ist der Flanschbereich 17b eben ausgebildet und weist wiederum an seiner bauteilseitigen Stirnfläche radial verlaufende Erhebungen 57 in Form von Kanten auf.

Bei der Ausführung gemäß Fig. 12 ist am Flanschbereich 17c ein zylindrischer Vorsprung 56c vorgesehen, der bauteilseitig vorsteht. Die bauteilseitige Stirnfläche des Vorsprungs 56c ist in vier Quadranten eingeteilt. In jedem Quadranten sind zueinander parallele tangential verlaufende Erhebungen 57c in Form von vorstehenden Kanten ausgebildet.

Bei der Ausführung gemäß Fig. 13 weist das Element 16d einen quadratischen Flanschbereich 17d auf, an dessen bauteilseitiger Stirnfläche diagonal verlaufende Erhebungen 57d in Form von Kanten ausgebildet sind.

Bei der Ausführung gemäß Fig. 14 weist das Element 16e einen oktaedrisch ausgebildeten Flanschbereich 17e auf, an dessen bauteilseitiger Stirnfläche wiederum radial verlaufende Erhebungen 57e in Form von vorstehenden Kanten ausgebildet sind.

Es versteht sich, daß anstelle einer seitlich neben dem Halter 14 vorgesehenen Gasleitung 32 gemäß Fig. 1 auch eine zentrale Gasleitung vorgesehen sein kann, so daß der Gasfluß aus dem Zwischenraum zwischen Spannzange 30 und Halter 14 in Richtung zum Bauteil 18 erfolgt.

Eine solche Ausführung kann auch verwendet werden, um eine Schutzgasschweißung zu erzielen. Anstelle von mit Überdruck austretendem Gas kann auch ein Unterdruck genutzt werden, um Reste von der Beschichtung 68 von der Bauteiloberfläche zu entfernen.

## Patentansprüche

1. Verfahren zum Lichtbogenschweißen von Elementen (16, 16a, b, c, d, e), insbesondere Metallbolzen, auf beschichtete Bauteile (18), insbesondere Metallbleche, bei dem ein Element (16, 16a, b, c, d, e) in einem ersten Schritt relativ zum Bauteil (18) bewegt wird, um die Beschichtung (68) des Bauteils (18) zur Herstellung eines elektrischen Kontakts zwischen Bauteil (18) und Element (16, 16a, b, c, d, e) zumindest teilweise aufzubrechen, wobei das Bauteil (18) und das Element (16, 16a, b, c, d, e) in einem nachfolgenden Schritt miteinander verschweißt werden, **dadurch gekennzeichnet, daß** das Element (16, 16a, b, c, d, e) um seine Längsachse (24) oszillierend bewegt wird, um die Beschichtung (68) des Bauteils (18) zumindest teilweise aufzubrechen.

2. Verfahren nach Anspruch 1, **dadurch gekennzeichnet, daß** das Element (16, 16a, b, c, d, e) während des ersten Schrittes in Axialrichtung oszillierend in Bezug auf das Bauteil (18) vor und zurück bewegt wird.

3. Verfahren nach Anspruch 1 oder 2, **dadurch gekennzeichnet, daß** das Bauteil (18) mittels eines Überdrucks oder Unterdrucks von Resten der Beschichtung (68) befreit wird.

4. Verfahren nach einem der vorhergehenden Ansprüche, **dadurch gekennzeichnet, daß** ein Element verwendet wird, das bauteilseitig einen Flanschbereich (17, 17a, b, c, d, e) aufweist.

5. Verfahren nach einem der vorhergehenden Ansprüche, **dadurch gekennzeichnet, daß** die Beschichtung mittels vom Flanschbereich (17, 17a, b, c, d, e) vorstehender Erhebungen (57, 57a, b, c, d, e) angekratzt wird.

6. Verfahren nach Anspruch 4 oder 5, **dadurch gekennzeichnet, daß** ein Element mit einem Flanschbereich (17, 17a) verwendet wird, der einen ringförmig ausgebildeten Vorsprung (56, 56a) aufweist.

7. Verfahren nach einem der vorhergehenden Ansprüche, **dadurch gekennzeichnet, daß** nach dem ersten Schritt ein zweiter Schritt durchgeführt wird, bei dem das Bauteil (18) mittels eines Lichtbogens (62) gereinigt wird.

8. Verfahren nach Anspruch 7, **dadurch gekennzeichnet, daß** der Lichtbogen (62) während des Reinigungsschrittes durch ein Magnetfeld (60) abgelenkt wird.

9. Verfahren nach Anspruch 8, **dadurch gekennzeichnet, daß** das Magnetfeld (60) so ausgerichtet wird, daß der Lichtbogen (62) während des Reinigungsschrittes auf einer geschlossenen Bahn um die Längsachse (25) des Elements (16, 16a, b, c, d, e) umläuft.

10. Verfahren nach Anspruch 7, 8 oder 9, **dadurch gekennzeichnet, daß** sich an den zweiten Schritt ein dritter Schritt anschließt, in dem die Spannung zwischen Bauteil (18) und Element (16, 16a, b, c, d, e) umgepolt wird und das Element (16, 16a, b, c, d, e) mit dem Bauteil (18) verschweißt wird.

11. Vorrichtung zum Lichtbogenschweißen von Elementen (16, 16a, b, c, d, e), insbesondere Metallbolzen, auf Bauteile (18), insbesondere Metallbleche, mit einem Schweißkopf (12), an dem ein Halter (14) zur Aufnahme eines zu verschweißenden Elementes (16, 16a, b, c, d, e) vorgesehen ist, mit einer Leistungsversorgungseinrichtung (22) zur Zuführung elektrischer Energie und mit Mitteln zur Bewegung des Halters (14) relativ zum Bauteil, **dadurch gekennzeichnet, daß** der Halter (14) um seine Längsachse (24) oszillierend antreibbar ist.

12. Vorrichtung nach Anspruch 11, **dadurch gekennzeichnet, daß** der Halter (14) einen magnetischen Antrieb (38, 40) zur Erzeugung der Oszillationsbewegung um die Längsachse (24) aufweist.

13. Vorrichtung nach Anspruch 11, **dadurch gekennzeichnet, daß** der Halter (14) mit einen Antriebshebel (36) mit einem radialen Abschnitt (38) gekoppelt ist, der zwischen zwei einander gegenüberliegenden Spulen (40, 48) hin und her beweglich ist.

14. Vorrichtung nach Anspruch 11, **dadurch gekennzeichnet, daß** der Halter (14) mit einem Exzenterantrieb (36a, 38a, 50, 52, 54) zur Erzeugung der Oszilationsbewegung um die Längsachse (24) gekoppelt ist.

15. Vorrichtung nach Anspruch 11, **dadurch gekennzeichnet, daß** der Halter (14) in Axialrichtung in Bezug auf das Bauteil (18) vor und zurück bewegbar ist.

16. Vorrichtung nach Anspruch 15, **dadurch gekennzeichnet, daß** zum Antrieb in Axialrichtung ein Linearmotor (42) vorgesehen ist.

17. Vorrichtung nach einem der vorhergehenden Ansprüche, **dadurch gekennzeichnet, daß** am Schweißkopf (12) eine Öffnung (34) vorgesehen ist, die mit einer Unterdruckquelle oder einer Überdruckquelle verbindbar ist.

18. Vorrichtung nach einem der Ansprüche 11 bis 17, **dadurch gekennzeichnet, daß** am Schweißkopf (12) eine Einrichtung zur Erzeugung eines Magnetfeldes, vorzugsweise ein Elektromagnet (58), zur Ablenkung eines zwischen dem Bauteil (18) und dem Element (16, 16a, b, c, d, e) erzeugten Lichtbogens (62) auf einer geschlossenen Bahn um die Längsachse (25) des Elements (16, 16a, b, c, d, e) vorgesehen ist.

19. Element, insbesondere Metallbolzen zum Lichtbogenschweißen auf beschichtete Bauteile (18), insbesondere Metallbleche, mit einem Flanschbereich (17, 17a) zur Verschweißung mit dem Bauteil (18), an dem Erhebungen (57, 57a) zum Ankratzen der Beschichtung (68) des Bauteils (18) vorgesehen sind, **dadurch gekennzeichnet, daß** der Flanschbereich (17, 17a, b, c, d, e) einen ringförmig ausgebildeten Vorsprung (56, 56a) aufweist, an dessen Stirnfläche die Erhebungen (57, 57a) ausgebildet sind.
